# EUROPÄISCHE PATENTSCHRIFT

(11) **EP 3 546 871 B1**
(45) Veröffentlichungstag und Bekanntmachung des Hinweises auf die Patenterteilung: **02.12.2020**
(21) Anmeldenummer: 18164747.0
(22) Anmeldetag: 28.03.2018
(51) Int. Cl.: F26B 15/08, F26B 17/22

(54) **TRENNVORRICHTUNG ZUM TRENNEN EINES FESTEN STOFFES AUS EINEM FÖRDERSTROM UND VERFAHREN ZUM WARTEN EINER SOLCHEN TRENNVORRICHTUNG**
SEPARATING DEVICE FOR SEPARATING A SOLID MATERIAL FROM A TRANSPORT STREAM AND METHOD FOR PERFORMING MAINTENANCE ON SUCH A SEPARATOR
DISPOSITIF DE SÉPARATION PERMETTANT DE SÉPARER UNE MATIÈRE SOLIDE À PARTIR D'UN DFLUX DE REFOULEMENT ET PROCÉDÉ DE MAINTENANCE D'UN TEL DISPOSITIF DE SÉPARATION

(43) Veröffentlichungstag der Anmeldung: 02.10.2019
(73) Patentinhaber: Nordson Corporation, Westlake, OH 44145-1119 (US)
(72) Erfinder: Schnellbach, Nikolai, 48308 Senden (DE); Bakenecker, Bernd, 48249 Dülmen (DE); Wirz, Marius, 48161 Münster (DE); Schröer, Michael, 67056 Ludwigshafen (DE)
(74) Vertreter: Eisenführ Speiser

(56) Entgegenhaltungen:
- DE-A1-102004 052 055
- DE-B- 1 251 241
- DE-U1-202007 004 462
- US-A1- 2010 050 458
- US-A1- 2017 254 164

## Beschreibung

Die Erfindung bezieht sich auf eine Trennvorrichtung, insbesondere einen Zentrifugaltrockner, zum Trennen eines Gemisches aus einem festen Stoff und einem Fluid, insbesondere von Granulat aus Wasser, mit einem Gehäuse, welches mindestens einen Gehäuseeinlass zum Zuführen des Gemisches und mindestens einen Gehäuseauslass zum Abführen von aus dem Gemisch getrennten festen Stoffs oder des Fluids aufweist, und einem innerhalb des Gehäuses angeordneten und um eine im Betrieb vorzugsweise im Wesentlichen vertikale Längsachse drehbar gelagerten Rotor, der dazu eingerichtet ist, durch Drehung eine Transportbewegung des festen Stoffes in Richtung seiner Längsachse zu bewirken. Die Erfindung bezieht sich des Weiteren auch auf ein Verfahren zum Warten einer Trennvorrichtung zum Trennen von Granulat aus einem flüssigen Förderstrom.

Solche Trennvorrichtungen werden im Stand der Technik eingesetzt, um ein Gemisch aus zum Beispiel einem Feststoff und einem Fluid, insbesondere von Granulat aus Wasser zu trennen. Das Gemisch aus Feststoff und Flüssigkeit wird dabei als ein Förderstrom der Trennvorrichtung zugeführt. Solche Trennvorrichtungen sind auch als Zentrifugaltrockner bekannt und werden beispielsweise in der kunststoffverarbeitenden Industrie verwendet. Diese werden eingesetzt, um ein zuvor erzeugtes Kunststoff-Granulat, das mittels eines Fluidstromes von einer Granuliereinrichtung abgeführt wird, wieder aus dem Fluidstrom zu separieren. Anschließend kann das separierte Granulat beispielsweise einer Weiterverarbeitung oder Verpackung zugeführt werden.

Die bekannten Trennvorrichtungen zum Trennen von beispielsweise Granulat aus einem Wasserstrom weisen ein Gehäuse auf, in das durch einen Gehäuseeinlass der Förderstrom, bestehend aus dem Wasserstrom und dem Granulat, in das Innere des Gehäuses eingeleitet wird. Das Gehäuse umfasst zumindest einen Gehäuseauslass zum Abführen des Feststoffes und/oder des Fluids. Innerhalb des Gehäuses ist ein Rotor drehbar gelagert, der sich im Betrieb um eine im Wesentlichen vertikal angeordnete Längsachse dreht. Der Rotor ist insbesondere dazu eingerichtet, über seine Drehbewegung den Feststoff im Wesentlichen entlang der Längsachse des Rotors zu transportieren. Der Rotor ist wenigstens teilweise von einem Sieb umgeben. Das Sieb erstreckt sich zumindest bereichsweise um den Rotor in Umfangsrichtung und auch in axialer Richtung, also in Richtung der Längsachse des Rotors. Das Sieb ist so ausgebildet, dass es das Granulat als Feststoff oder festes Material im Wirkungsbereich des Rotors zurückhält und die flüssige Phase in radialer Richtung durch das Sieb nach außen hindurchlässt. Damit ist das Trennen des Förderstromes in seine festen und flüssigen Bestandteile bewirkt.

Der Rotor unterliegt aufgrund des Kontaktes mit den insbesondere in Längsrichtung des Rotors zu fördernden Granulaten einem ständigen Verschleiß, sodass der Rotor in bestimmten Zeitintervallen zu warten und gegebenenfalls auszutauschen ist.

In bestimmten Anwendungsfällen solcher Trennvorrichtungen kann der Rotor in seiner Längsrichtung Abmessungen von mehr als 2 - 3 m aufweisen. Das Wechseln des üblicherweise vertikal ausgerichteten Rotors erfolgt unter Zuhilfenahme von Hebezeugen, wobei der Rotor üblicherweise am oberen Ende aus der Trennvorrichtung herausgehoben wird. Dies ist jedoch nur möglich, wenn eine ausreichende Deckenhöhe am Aufstellungsort der Trennvorrichtung vorhanden ist. Im ungünstigsten Fall ist die Trennvorrichtung aus einer Anlage zur Granulatherstellung herauszulösen und die gesamte Trennvorrichtung von ihrer vertikalen Ausrichtung in ihre horizontale Ausrichtung zu bringen, um den Rotor austauschen zu können. Ein solcher Wechsel ist demnach mit einem hohen Aufwand verbunden.

DE 20 2007 004462 U1 betrifft einen Zentrifugaltrockner zum Trennen granulatförmiger Stoffe von einem Fluid, mit einem Gehäuse, einem in dem Gehäuse angeordneten Rotor sowie einem den Rotor umfangsseitig umgebenden Sieb.

Der Erfindung lag daher die Aufgabe zugrunde, eine Trennvorrichtung zum Trennen eines festen Stoffes aus einem Förderstrom sowie ein Verfahren zum Warten einer Trennvorrichtung der eingangs bezeichneten Art dahingehend zu verbessern, dass die Wartung auf einfache Weise und mit verkürzten Zeitaufwand möglich ist.

Die Erfindung löst die ihr zugrundeliegende Aufgabe bei einer Trennvorrichtung zum Trennen eines festen Stoffes aus einem Förderstrom mit den Merkmalen des Gegenstands von

Anspruch 1 und bei einem Verfahren zum Warten einer solchen Trennvorrichtung mit den Merkmalen gemäß dem Gegenstand von Anspruch 15. Insbesondere schlägt die Erfindung eine Trennvorrichtung vor, deren Rotor in Richtung der Längsachse mehrere voneinander trennbare Rotorsegmente aufweist.

Die Erfindung erreicht, dass aufgrund des in Längsrichtung teilbaren Rotors dieser in Teilen aus dem Gehäuse entnommen bzw. montiert werden kann. Ein solch in Längsrichtung geteilter Rotor kann dann, falls nicht anders möglich, sektionsweise über das obere Ende der Trennvorrichtung herausgehoben werden. Damit sind auf vorteilhafte Weise ein Ausbau der Trennvorrichtung aus der Anlage und das Umlegen der Trennvorrichtung vermieden.

In einer bevorzugten Ausführungsform der Erfindung ist die Trennvorrichtung dazu eingerichtet, die Rotorsegmente des in Längsrichtung geteilten Rotors über ein Seitenteil des Gehäuses, wie beispielsweise eine öffen- und schließbare Gehäusetür, entnehmen und auch wieder einsetzen zu können. Ein Herausheben eines Rotorsegmentes, auch bezeichnet als ein Abschnitt des Rotors, über das obere Ende der erfindungsgemäßen Trennvorrichtung, ist damit vermieden. Gemäß einer bevorzugten Ausgestaltung der vorliegenden Erfindung ist der Rotor aus drei oder mehr Rotorsegmenten gebildet, wodurch die Handhabung der Rotorsegmente, beispielsweise beim Wechseln des Rotors, weiter verbessert ist. Vorliegend ist unter einer im Wesentlichen vertikalen Ausrichtung der Rotor-Längsachse bevorzugt eine Ausrichtung in einem Winkel bis zu 10° geneigt zu Vertikalen zu verstehen, sodass mit den Transportelementen eine Transportbewegung in nahezu senkrechter Richtung umgesetzt ist, was das Trennen des festen Stoffes vom Fluid vereinfacht. In einer Ausführungsform der Erfindung kann die Längsachse des Rotors und damit die erfindungsgemäße Vorrichtung insgesamt geneigt zur Vertikalen sein, beispielsweise in einem Winkel bis etwa 40° zur Vertikalen.

Gemäß einer bevorzugten Weiterbildung der erfindungsgemäßen Trennvorrichtung sind zwei zueinander benachbarte Rotorsegmente mittels korrespondierender Verbindungsteile reversibel lösbar miteinander verbunden. Die Verbindungsteile bilden eine Art Verbindungseinrichtung für die vorzugsweise koaxial zueinander anzuordnenden Rotorsegmente des mehrteiligen Rotors aus. Über die Verbindungseinrichtung ist insbesondere eine drehfeste Verbindung der Rotorsegmente um ihre Längsachse sowie eine feste Verbindung der Rotorsegmente untereinander in Achsrichtung des Rotors erzeugt. Die in Achsrichtung feste und die drehfeste Verbindung zwischen den Rotorsegmenten wird beispielsweise über mehrere die Verbindungsteile der Verbindungseinrichtung arretierende Verschraubungen gewährleistet.

Vorzugsweise weisen die Verbindungsteile der Rotorsegmente miteinander in Anlage bringbare Kontaktflächen auf und ferner und sind Zentriermittel zur koaxialen und/oder radialen Ausrichtung der Rotorsegmente relativ zueinander vorgesehen sind, die vorzugsweise an den Kontaktflächen ausgebildet sind. Mit Hilfe der Zentriermittel erfolgt eine bevorzugt koaxiale Ausrichtung der Rotorsegmente. Insbesondere wird ein radialer Versatz zweier Rotorsegmente bezogen auf die Längsachse des Rotors vermieden, wodurch im Betrieb der erfindungsgemäßen Trennvorrichtung etwaige Unwuchten gering gehalten werden. Bevorzugt weisen die Kontaktflächen der Verbindungsteile in Achsrichtung vorstehende oder zurückspringende Flächenbereiche auf, welche axial ineinandergreifen und eine entsprechende Arretierung in radialer Richtung bewirken. Vorzugsweise weist die Kontaktfläche eines Verbindungsteiles einen zylindrischen Vorsprung und die Kontaktfläche des anderen Verbindungsteiles eine korrespondierende, zylindrische Ausnehmung oder Vertiefung auf. Bevorzugt weisen die miteinander korrespondierenden Zentriermittel eine spielfreie Verbindung auf.

Eine andere Weiterbildung der erfindungsgemäßen Trennvorrichtung sieht vor, dass die Verbindungsteile miteinander korrespondierende Kraftschluss- und/oder Formschlusselemente für eine vorgegebene Winkelausrichtung der Rotorsegmente um ihre Längsachse herum aufweisen. Bevorzugt werden die Rotorsegmente des Rotors mit Hilfe der Formschlusselemente bereits beim Zusammensetzen in eine feste Winkelausrichtung zueinander gebracht. Dadurch ist ein aufwendiges Ausrichten der Rotorsegmente in Umfangsrichtung während des Austauschens nicht notwendig. Damit ist bevorzugt eine mögliche Fehlerquelle bei der Wartung der erfindungsgemäßen Trennvorrichtung vermieden. Mit Hilfe von Kraftschlusselementen werden die Rotorsegmente bevorzugt direkt miteinander gekoppelt bzw. fixiert, wobei durch das feste Verbinden der Rotorsegmente untereinander zwischen den Verbindungsteilen insbesondere ein Reibschluss wirkt Vorzugsweise sind die Formschlusselemente als in Achsrichtung an der Kontaktfläche eines Rotorsegmentes vorstehende zapfenartige Vorsprünge ausgebildet. Die Vorsprünge greifen bevorzugt spielfrei in entsprechende korrespondierende Ausnehmungen in die Kontaktfläche des benachbarten Rotorsegmentes ein. Bevorzugt sind mindestens zwei Formschlusselemente in einem vorgegebenen Abstand zur Längsachse des Rotorsegmentes angeordnet. In einer Ausführungsform der Erfindung sind die Formschlusselemente asymmetrisch zueinander um die Längsachse herum verteilt angeordnet, wodurch eine Vorzugsausrichtung der Rotorsegmente zueinander erreicht ist.

Vorzugsweise weist der Rotor ein unteres Axial- und/oder Radiallager zur drehbaren Lagerung auf, welches vorzugsweise an einer an einem unteren Abschnitt des Gehäuses angeordneten Lagerplatte befestigt ist. Damit ist der im Betrieb bevorzugt vertikal ausgerichtete Rotor fest in axialer am Gehäuse der Trennvorrichtung aufgenommen. Das untere Axial- und/oder Radiallager ist bevorzugt lösbar an der Lagerplatte befestigt, so dass im Falle einer Wartung oder Demontage des Rotors das untere Lager an der Lagerplatte gelöst und der Rotor unten auf der Lagerplatte abgesetzt werden kann. Die Lagerplatte bildet vorzugsweise den Boden einer im Gehäuse der Vorrichtung angeordneten Trennkammer für das zu trennende Gemisch aus.

Der Rotor weist zudem einen separaten Wellenabschnitt auf, der vorzugsweise mittels des unteren Axial- und/oder Radiallagers fest im Gehäuse aufgenommen ist und sich bereichsweise in das untere Rotorsegment des Rotors hinein erstreckt. Mittels des separaten Wellenabschnitts ist ein unterer Lagerpunkt innerhalb des Gehäuses der Trennvorrichtung ausgebildet, auf dem der erfindungsgemäß ausgebildete Rotor gelagert ist. Durch den sich in das untere Rotorsegment hinein erstreckenden Wellenabschnitt ist weiter eine geringe Bauhöhe innerhalb der Trennvorrichtung erreicht.

Gemäß einer bevorzugten Weiterbildung ist mindestens eines der Rotorsegmente, insbesondere das untere Rotorsegment mittels einer Wellenkupplung mit dem separaten Wellenabschnitt zum Koppeln mit einem Antrieb zum Drehen des Rotors gekoppelt, wobei die Wellenkupplung vorzugsweise wenigstens abschnittsweise innerhalb des unteren Rotorsegments angeordnet ist. Der sich von unten in das untere Rotorsegment hinein erstreckenden Wellenabschnitt wird vorzugsweise über eine Verbindungskupplung mit dem Wellenabschnitt des unteren Rotorsegmentes gekoppelt. Vorzugsweise ist eine drehfeste Kopplung zwischen dem separaten Wellenabschnitt und dem Wellenabschnitt des unteren Rotorsegmentes jeweils über eine Passfederverbindung bewirkt. Zudem wird über einen Buchsenkörper der Verbindungskupplung eine Klemmkraft auf die jeweiligen äußeren Oberflächen der Wellenabschnitte ausgeübt.

Eine Weiterbildung der Trennvorrichtung sieht vor, dass mindestens ein Rotorsegment, vorzugsweise alle Rotorsegmente jeweils einen zentralen Wellenabschnitt aufweisen, an den mindestens zwei Rotorsterne zum Halten von mehreren Transportelementen zum Transportieren des festen Stoffes in Richtung der Längsachse des Rotors angeordnet sind. Mittels der an den Rotorsternen angeordneten Transportelementen ist bevorzugt ein äußerer Förderabschnitt am Rotor ausgebildet. Zudem weist jedes Rotorsegment mit seinem Wellenabschnitt und dem bevorzugt daran angeordneten Rotorstern eine entsprechend hohe Festigkeit auf, wodurch die Fähigkeit, auch bei relativ hohen Drehzahlen die vorgegebene Form zu halten, verbessert ist. Mit Hilfe der Rotorsterne werden insbesondere die Reihen von Transportelementen um den Wellenabschnitt des Rotorsegmentes bzw. die Welle des dann zusammengesetzten Rotors in Position gehalten. Der Rotorstern bildet somit in vorbestimmten Abständen entlang der Welle des gesamten Rotors eine Halterung für die bevorzugt um den Umfang herum verteilt angeordneten Reihen von Transportelementen aus.

Vorzugsweise weist jedes Rotorsegment zwei in Richtung seiner Längsachse beabstandet zueinander angeordnete Verbindungsteile auf, wobei ein Verbindungsteil im Wesentlichen plattenförmig ausgebildet ist und/oder vorzugsweise als Rotorstern mit sternförmig nach außen abstehenden Vorsprüngen ausgebildet ist. Die Verbindungsteile mit ihren radial nach außen gerichteten Vorsprüngen haben somit neben dem Herstellen der Verbindung zwischen zwei Rotorsegmenten die Aufgabe die Transportelemente um die Längsachse des Rotors herum zu positionieren. Die plattenförmigen Verbindungsteile weisen zur Gewichtsminimierung vorzugsweise in axialer Richtung verlaufende Durchbrüche auf. Die Verbindungsteile werden bevorzugt über mehrere sich in axialer Richtung erstreckende Verschraubungen kraft- und/oder formschlüssig miteinander verbunden. Die als Rotorsterne ausgebildeten Verbindungsteile weisen entsprechend der Anzahl von Reihen von am Rotor vorgesehenen Transportelementen eine entsprechende Anzahl von radial nach außen gerichteten Vorsprüngen auf. Die Transportelemente sind beispielsweise über sich im Wesentlichen parallel zur Welle des Rotors erstreckende Verbindungsbleche mit einem Endbereich eines jeweiligen Vorsprungs des Verbindungsteiles verbunden.

In einer Ausführungsform der Erfindung erfolgt die drehfeste Verbindung der Rotorsegmente untereinander ausschließlich über die Verbindungseinrichtungen, insbesondere die an den Wellenabschnitten angeordneten Rotorsterne. In einer anderen Ausführungsform der Erfindung werden optional die Wellenabschnitte der Rotorsegmente über zum Beispiel Schaftkupplungen miteinander drehfest gekoppelt.

In einer anderen Ausführungsform der Erfindung ist an einer der seitlichen Flanken jedes radial abstehenden Vorsprungs jeweils eine Reihe von Transportelementen angeordnet. Ein sich am Rotorstern radial nach außen erstreckender Vorsprung weist insbesondere keilförmig zulaufende Flanken auf, wobei, bezogen auf die Drehrichtung des Rotors an den in Drehrichtung weisenden Flanken jeweils die Verbindungsbleche mit den daran angeordneten Transportelementen angeordnet sind. Bevorzugt weisen die Transportelemente in Umfangsrichtung des Rotors bezogen auf die Bewegungsrichtung des mittels der Transportelemente bewegten Feststoffes eine sich verringernde Breite auf. Die in Drehrichtung des Transportelementes vordere Kante ist etwa doppelt so breit wie die Hinterkante.

Gemäß einer Weiterbildung sind die Rotorsegmente mit ihren Transportelementen mindestens teilweise innerhalb eines den Rotor umgebenden Siebes angeordnet und/oder die Rotorsegmente weisen eine Vielzahl von vorzugsweise lamellenartigen Transportelementen auf, welche vorzugsweise in mehreren Reihen um die Längsachse herum angeordnet und/oder in einem Winkel geneigt zur Längsachse des Rotors ausgerichtet sind. Mit den Transportelementen wird der Feststoff, der vorzugsweise an einer Umfangsfläche der Trennkammer mit dem Förderstrom in eine Trennkammer eingebracht wird, von unten vertikal nach oben bewegt. Im oberen Bereich wird der nahezu von der Flüssigkeit befreite Feststoff dann über einen Auslass aus der Trennkammer und über einen Gehäuseauslass aus der Trennvorrichtung für eine sich anschließende Weiterverarbeitung abgeführt. Die Flüssigkeit, mit der der Feststoff transportiert wird, wird durch die in radialer Richtung wirkenden Fliehkräfte durch ein um den sich drehenden Rotor herum angeordnetes Sieb radial nach außen herausgedrückt und bewegt sich dann aufgrund der wirkenden Schwerkraft in Richtung des unteren Endes der Trennvorrichtung. Bevorzugt sind vier, fünf sechs oder mehr Reihen von Transportelementen am Rotor vorgesehen, welche gleichmäßig über den Umfang des Rotors verteilt sind. Jede Reihe von Transportelementen an dem mehrteiligen Rotor kann, je nach Größe des Rotors, eine Anzahl von wenigen Transportelementen, wie beispielsweise fünf oder sechs Transportelemente bis zu einer Anzahl von mehr als 20, 30 oder 40 Transportelementen aufweisen. Jedes Transportelement weist ein Flächenelement auf, das sich etwa radial nach außen erstreckt und bevorzugt unter einem Winkel im Bereich zwischen 20° und 70° zur Längsachse des Rotors geneigt angeordnet ist. Das Transportelement ist ähnlich einem Paddel ausgebildet. Die äußere Umfangsfläche des Transportelementes weist eine gebogene Kontur auf, wobei die Transportelemente sämtlicher Reihen am Rotor Außenkonturen aufweisen, die eine im Wesentlichen zylindrische Form des Rotors erzeugen.

In einer anderen Ausführungsform der Erfindung ist der Rotor mittels eines oberen Drehlagers an einer Konsole am oberen Endbereich des Gehäuses gelagert, wobei vorzugsweise das obere Rotorsegment einen am oberen Ende vorstehenden Wellenabschnitt aufweist, der mittels des Drehlagers aufgenommen ist. Das obere Rotorsegment eines insbesondere vertikal ausgerichteten Rotors weist einen über sein oberes Ende vorstehenden Wellenabschnitt auf, der mittels des Drehlagers an insbesondere einer Konsole am oberen Endbereich des Gehäuses aufgenommen ist. Mit Hilfe des oberen Drehlagers, welches beispielsweise als Radiallager ausgebildet ist, werden insbesondere Kräfte quer zur Längsachse des Rotors aufgenommen und der Rotor bevorzugt in seiner vertikalen Ausrichtung gehalten. In einer bevorzugten Weiterbildung ist das Drehlager am oberen Ende dazu eingerichtet, auch Kräfte in axialer Richtung aufzunehmen. Die Konsole, an der das Drehlager befestigt ist, erstreckt sich durch das Gehäuse der Trennvorrichtung um einen Bereich der Längsachse des Rotors. Die Konsole ist ähnlich einem Tragarm ausgebildet, an dem das obere Drehlager insbesondere verschraubt ist.

In einer bevorzugten Ausgestaltung der Erfindung weist die Konsole eine Ausnehmung zum seitlichen Herausführen des Wellenabschnittes des oberen Rotorsegmentes auf. Die Konsole ist im Inneren des Gehäuses so angeordnet bzw. ausgebildet, dass die bevorzugt als Tragarm ausgebildete Konsole Bereiche des Wellenabschnittes des Rotors umgreift. Damit ist insbesondere nach dem Lösen der Verbindung zwischen dem oberen Drehlager am Rotor ein einfaches Entnehmen des oberen Rotorsegmentes ermöglicht. In einer bevorzugten Ausführungsform wird das obere Rotorsegment vornehmlich in Achsrichtung nach oben verschoben und in eine im Gehäuse dafür vorgesehene Aufnahme eingehängt, sodass ein mittleres Rotorsegment bzw. ein unterhalb des oberen Rotorsegmentes angeordnetes Rotorsegment aus dem Inneren des Gehäuses der Trennvorrichtung entnommen werden kann. Insbesondere das Austauschen von Rotorsegmenten, die defekt sind oder ihre Verschleißgrenze erreicht haben, ist damit vereinfacht, da nicht zwingenderweise alle Rotorsegmente aus dem Gehäuse ausgebaut werden müssen, um nur das untere Rotorsegment aus dem Inneren des Gehäuses entnehmen zu können.

Der Rotor ist in einer zumindest von dem Sieb definierten den Rotor umfangsseitig umgebenden Trennkammer eingeschlossen, und das Gehäuse weist mindestens eine seitliche Öffnung und eine Klappe zum Verschließen der Öffnung auf, die so ausgebildet sind, dass ein Rotorsegment oder alle Rotorsegmente durch die Öffnung in das Gehäuse eingebracht bzw. durch die Öffnung aus dem Gehäuse entnehmbar ist/sind. Das um den Rotor herum angeordnete Sieb, welches die Trennkammer um den Rotor definiert, weist zu jedem Heberelement einen geringen Abstand auf, sodass ein Kontakt mit dem Sieb vermieden ist. Der Abstand beträgt etwa 5 mm bis ungefähr 15 mm und ist bevorzugt größer als der Korndurchmesser des Granulats, um ein Klemmen des Feststoffes zwischen den Transportelementen und dem Sieb und einen "Mahleffekt" an den Bauteilen zu vermieden. Unter der im Wesentlichen entlang der Längsachse erfolgenden Transportbewegung des festen Materials durch den sich drehenden Rotor ist eine Bewegung des Feststoffes mit einer axialen Komponente zu verstehen von einem Ende des Rotors in Richtung des anderen Endes des Rotors, auch wenn der Feststoff tatsächlich innerhalb der Trennkammer eine beispielsweise spiralförmige Bewegung ausführt, also zusätzlich zu der axialen Komponente der Bewegung weitere Bewegungskomponenten hinzukommen.

Ferner ist ein Rotor für eine Trennvorrichtung beschrieben. Der Rotor, insbesondere ein Rotor für einen Zentrifugaltrockner, ist dazu eingerichtet, über seine Drehbewegung eine Transportbewegung eines Feststoffes, wie beispielsweise ein Granulat, im Wesentlichen entlang seiner Längsachse umzusetzen. Der Rotor zeichnet sich dadurch aus, dass der Rotor in Richtung der Längsachse mehrere voneinander trennbare Rotorsegmente aufweist. Durch das Unterteilen des Rotors in mindestens zwei, bevorzugt drei oder mehr Rotorsegmente ist der Rotor bei möglichen daran durchzuführenden Wartungs- und/oder Instandhaltungsarbeiten einfacher zu handhaben. Der Rotor ist in mehrere Rotorabschnitte zerlegbar, die zudem über einen Seitenbereich des Gehäuses, wie beispielsweise eine Tür, entnehmbar bzw. austauschbar sind.

Die Erfindung betrifft in einem weiteren Aspekt ebenfalls ein Verfahren zum Warten einer Trennvorrichtung nach einer der vorstehend beschriebenen bevorzugten Ausführungsformen.

Das erfindungsgemäße Verfahren löst die eingangs beschriebene Aufgabe mit den Schritten: Öffnen eines Teils des Gehäuses und Demontieren zumindest eines Flächenelementes, welches mindestens einen Bereich einer den Rotor umgebenden Trennkammer ausbildet; Lösen mindestens eines Lagers des Rotors, vorzugsweise des oberen oder unteren Lagers des Rotors; Lösen mindestens einer Verbindung zwischen zwei benachbarten Rotorsegmenten, und Entnehmen eines Rotorsegments, insbesondere eines unterhalb des oberen Rotorsegmentes angeordneten Rotorsegmentes durch bevorzugt eine seitliche Öffnung des Gehäuses, und vorzugsweises Entnehmen eines weiteren Rotorsegments, insbesondere des oberen oder unteren Rotorsegmentes aus dem Gehäuse der Trennvorrichtung.

Mit Hilfe der erfindungsgemäßen Verfahrensschritte ist es möglich, anstelle eines sonst üblicherweise einteilig ausgebildeten Rotors, der über das obere Ende einer Trennvorrichtung herauszuheben ist, den Rotor in mehrere Rotorsegmente zu vereinzeln und anschließend mit einem Rotorsegment des Rotors beginnend die Rotorsegmente des Rotors nacheinander aus dem Inneren des Gehäuses einer Trennvorrichtung zu entnehmen und gegebenenfalls durch entsprechende Ersatz- oder Austauschteile zu ersetzen bzw entsprechend zu montieren. Bevorzugt erfolgt das Entnehmen und Einsetzen von Rotorsegmenten des Rotors über die öffen- und schließbare seitliche Gehäusetür des Gehäuses. Um insbesondere die Verbindung zwischen den einzelnen Rotorsegmenten des Rotors und die Verbindung zwischen dem Drehlager und der Konsole im Gehäuse zu lösen, ist in einer Ausführungsform der Erfindung, ein den Rotor umgebendes Flächenelement, nämlich das um die Umfangsfläche des Rotors im Abstand dazu angeordnete Sieb vorab zu entfernen, von welchem der Rotor in seiner Längsrichtung zumindest abschnittsweise eingehaust ist.

Gemäß einer bevorzugten Ausgestaltung umfasst das erfindungsgemäße Verfahren einen, mehrere oder sämtliche der nachfolgend aufgeführten Schritte: Montieren durch Zusammensetzen und Ausrichten mehrerer in Längsrichtung des Rotors nebeneinander montierbarer Rotorsegmente durch Zentrieren der Rotorsegmente über Zentriermittel zueinander und/oder durch in Wirkverbindungbringen von miteinander korrespondierenden Formschlusselementen an benachbarten Rotorsegmenten; Lösen und/oder Verbinden einer Verbindungskupplung zwischen einem separaten, über ein unteres Drehlager für den Rotor am Gehäuse aufgenommenen Wellenabschnitt und einem Wellenabschnitt des unteren Rotorsegmentes des Rotors.

Die zur erfindungsgemäßen Trennvorrichtung beschriebenen, bevorzugten Ausführungsformen bzw. Weiterbildungen sind zugleich auch bevorzugte Ausführungsformen des Rotors sowie des erfindungsgemäßen Verfahrens zum Warten einer Trennvorrichtung. Hierin beschriebene bevorzugte Ausführungsformen bzw. Weiterbildungen des Rotors sowie des Verfahrens zum Warten der Trennvorrichtung, welche sich auf die Trennvorrichtung beziehen, sind zugleich bevorzugte Ausführungsformen der Trennvorrichtung.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer erfindungsgemäßen Trennvorrichtung;
- Fig. 2:: eine Vorderansicht der Trennvorrichtung im Schnitt;
- Fig. 3:: eine perspektivische Ansicht der erfindungsgemäßen Trennvorrichtung im Schnitt;
- Fig. 4:: eine Explosionsdarstellung eines Rotors;
- Fig. 5:: eine Ansicht, welche den Rotor nach Fig. 4 in seinem zusammengebauten Zustand zeigt;
- Fig. 6:: eine Draufsicht auf einen Rotorstern;
- Fig. 7:: eine vergrößerte Teilansicht der Einkreisung VII aus Fig. 5;
- Fig. 8:: eine vergrößerte Teilansicht der Einkreisung VIII aus Fig. 5;
- Fig. 9:: eine perspektivische Teilansicht der Trennvorrichtung nach Fig. 3 im Schnitt, und
- Fig. 10:: ein Blockschaltbild eines erfindungsgemäßen Verfahrens zum Warten einer Trennvorrichtung.

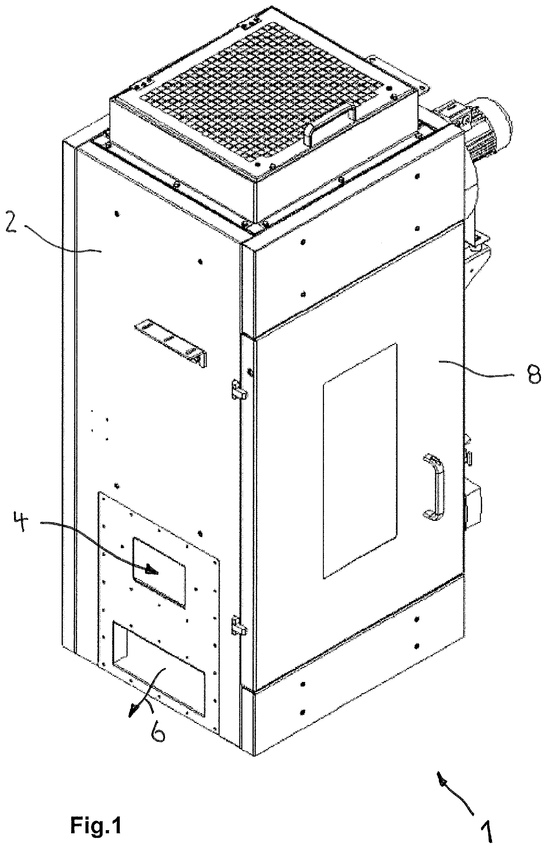

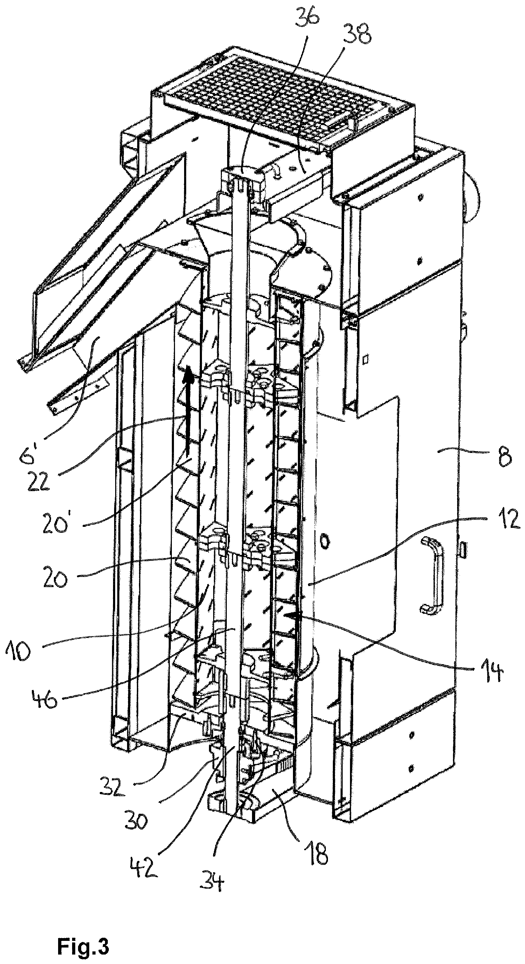

In Fig. 1 ist eine als Zentrifugaltrockner ausgebildete Trennvorrichtung 1 zum Trennen eines festen Stoffes aus einem Förderstrom gezeigt. Die Trennvorrichtung 1 umfasst ein Gehäuse 2 mit einem Gehäuseeinlass 4 zum Zuführen eines Gemisches aus Wasser und Granulat und mindestens einem Gehäuseauslass 6 zum Abführen des Wassers aus dem Gehäuse und einem Gehäuseauslass 6' (Fig. 3) zum Abführen des Feststoffes. Das Gehäuse 2 weist eine schwenkbar am Gehäuse angelenkte Gehäusetür 8 für einen Zugang in das Innere der Trennvorrichtung 1 auf.

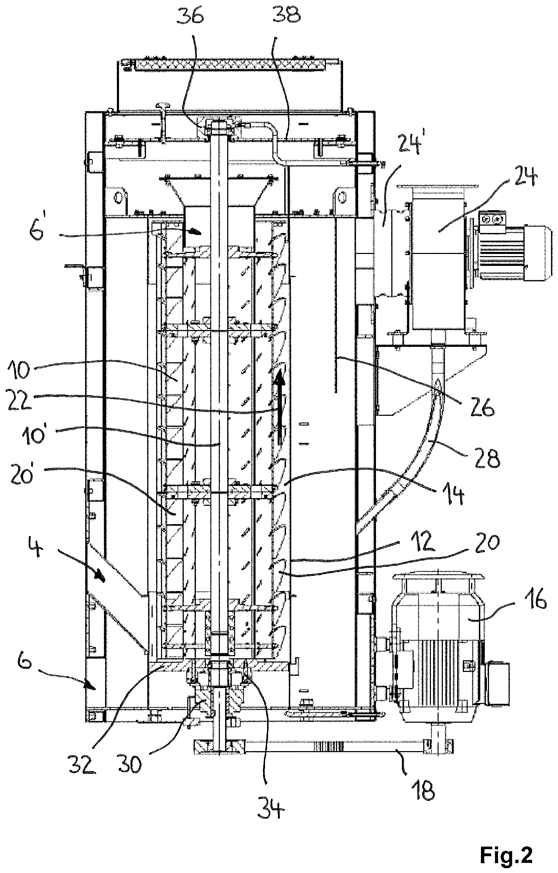

Wie Figuren 2 und 3 zeigen, ist innerhalb des Gehäuses 2 ein Rotor 10 angeordnet. Der Rotor 10 weist eine im Wesentlichen vertikale Längsachse 10' auf, um die der Rotor im Betrieb drehbar ist. Der Rotor 10 ist zudem dazu eingerichtet, durch Drehung um die Längsachse 10' eine Transportbewegung des festen Stoffes in Richtung seiner Längsachse vom Einlass 4 zum Auslass 6' am oberen Ende des Gehäuses 2 (Fig. 3) umzusetzen.

Der Rotor 10 ist in Umfangsrichtung und in Längsrichtung zumindest bereichsweise bzw. abschnittsweise von einem Sieb 12 umgeben. Das Sieb 12 definiert eine Trennkammer 14 für den aus dem Gemisch von Wasser und dem festen Stoff herauszutrennenden festen Stoff. Der Rotor 10 wird über einen bevorzugt als Elektromotor ausgebildeten Antrieb 16 über das Getriebe 18 in Drehung versetzt. Der Rotor weist eine Vielzahl von Transportelementen 20, 20' auf. Die Transportelemente 20, 20' sind jeweils in mehreren Reihen um die Längsachse 10' des Rotors 10 herum angeordnet. Die Transportelemente 20, 20' verlaufen in einem Winkel geneigt zur Längsachse 10' des Rotors. Mittels der Transportelemente 20, 20' ist am äußeren Umfang des Rotors 10 ein äußerer Förderabschnitt ausgebildet. Durch die schräggestellten Transportelemente 20, 20' ist die Transportbewegung 22 vom Einlass 4 in Richtung des Auslasses 6' für den Feststoff bewirkt.

Am Gehäuse 2 ist ferner ein Ventilator 24 angeordnet, der fluidleitend über den Abluftkanal 24' mit dem Inneren des Gehäuses 2 verbunden ist. Über den Ventilator 24 wird im Inneren des Gehäuses 2 befindlicher Wasserdampf abgeführt, der beim Verdunsten des Wassers auf der Oberfläche des bereits abgeschiedenen aber noch heißen, festen Stoffes entsteht. Innerhalb des Gehäuses ist ein Staublech 26 angeordnet, mit dem der Einlauf des Abluftkanales 24' abgedeckt ist. Ferner ist am Ventilator 24 eine Kondensat-Leitung 28 zum Zurückführen von mit abgeführtem Fluid vorgesehen.

Wie ferner aus den Figuren 2 und 3 ersichtlich, weist der Rotor 10 ein unteres Axial- und/oder Radiallager 30 zur drehbaren Lagerung des Rotors auf, das an einer Lagerplatte 32 angeordnet ist. Das untere Lager 30 ist über mehrere Verschraubungen 34 lösbar mit der Lagerplatte 32 verbunden. Nach dem Lösen der Verschraubungen 34 kann das untere Lager 30 nach unten an der Lagerplatte 32 abgenommen und der Rotor 10 auf der Lagerplatte 32 abgesetzt werden. Des Weiteren ist der Rotor 10 mittels eines oberen Drehlagers 36 an einer Konsole 38 mit dem Gehäuse 2 verbunden. Das obere Drehlager 36 kann gemäß einer Ausführung auch als Axial- und/oder Radiallager ausgebildet sein.

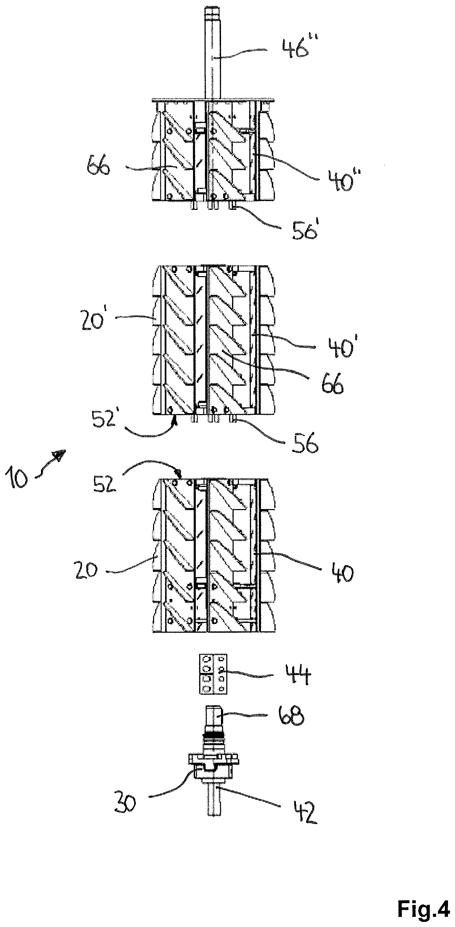

Der Rotor 10 ist, wie Fig. 4 zeigt, in Richtung seiner Längsachse 10' in mehrere voneinander trennbare Rotorsegmente 40, 40', 40" unterteilt, bzw. der Rotor 10 weist in Längsrichtung mehrere voneinander trennbare Rotorsegmente 40, 40', 40" auf. Ferner weist der Rotor einen separaten Wellenabschnitt 42 auf. Der Wellenabschnitt 42 ist mittels des daran angeordneten unteren Drehlagers 30 aufgenommen. Der Wellenabschnitt 42 erstreckt sich bereichsweise in das untere Rotorsegment 40 hinein. Der untere Wellenabschnitt 42 ist über eine Wellenkupplung 44 mit einem Wellenabschnitt 46 des unteren Rotorsegments 40 drehfest gekoppelt. Das obere Rotorsegment 40" weist einen Wellenabschnitt 46" auf, der über das obere Ende des Rotorsegments 40" hervorsteht.

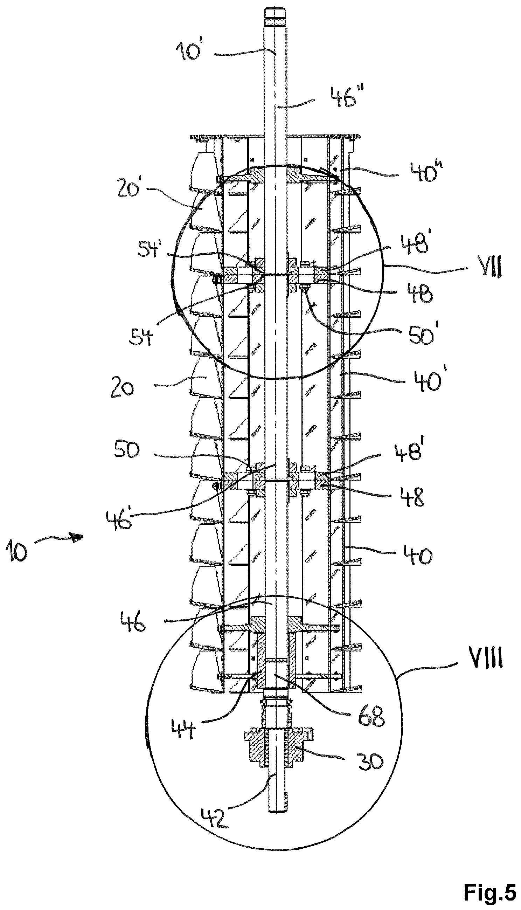

Fig. 5 zeigt den sich aus mehreren Rotorsegmenten 40, 40', 40" zusammensetzenden Rotor 10 im montierten Zustand, wobei sämtliche Rotorsegmente 40, 40', 40" drehfest miteinander verbunden sind. Das Verbinden der einzelnen Rotorsegmente 40, 40', 40" erfolgt mittels korrespondierender Verbindungsteile 48, 48', welche über Verschraubungen 50, 50' lösbar miteinander verbunden sind. Dadurch ist gewährleistet, dass die Rotorsegmente 40, 40', 40" voneinander getrennt werden können. Jedes Verbindungsteil 48, 48' weist miteinander in Kontakt bringbare Kontaktflächen 52, 52' auf. An den Kontaktflächen 52, 52' sind Zentriermittel 54, 54' zur koaxialen und/oder radialen Ausrichtung der Rotorsegmente 40, 40', 40" zueinander vorgesehen. Das Zentriermittel 54 ist als axialer Materialvorsprung in der Kontaktfläche 52 des Verbindungsteiles 48 und das Zentriermittel 54' als Hinterschneidung in der Kontaktfläche 52' des Verbindungsteiles 48' ausgebildet. Ferner sind in einer Ausführungsform der Erfindung an der Kontaktfläche 52' der Rotorsegmente 40', 40" axial abstehende Kraftschluss- und/oder Formschlusselemente 56, 56' (Fig.4) angeordnet, die in nicht näher gezeigte, als Ausnehmungen ausgebildete Formschlusselemente an der Kontaktfläche 52 der Rotorsegmente 40, 40' eingreifen. Die Wellenkupplung 44 ist, wie Fig. 5 verdeutlicht, ein Hülsenteil, das jeweils mit dem Wellenabschnitt 42 und mit dem Wellenabschnitt 46 des unteren Rotorsegments 40 bevorzugt form- und kraftschlüssig verbunden wird.

Jedes Rotorsegment 40, 40', 40" weist jeweils einen zentralen Wellenabschnitt 46, 46', 46" auf. An den Wellenabschnitten 46, 46', 46" der Rotorsegmente sind mindestens jeweils zwei Verbindungsteile 48, 48' angeordnet. Über die Verbindungsteile erfolgt das Verbinden der Rotorsegmente 40, 40', 40" untereinander sowie das Halten der Transportelemente 20, 20' zu den jeweiligen Wellenabschnitten 46, 46', 46". Die Verbindungsteile 48, 48' sind in Richtung der Längsachse 10' beabstandet zueinander angeordnet.

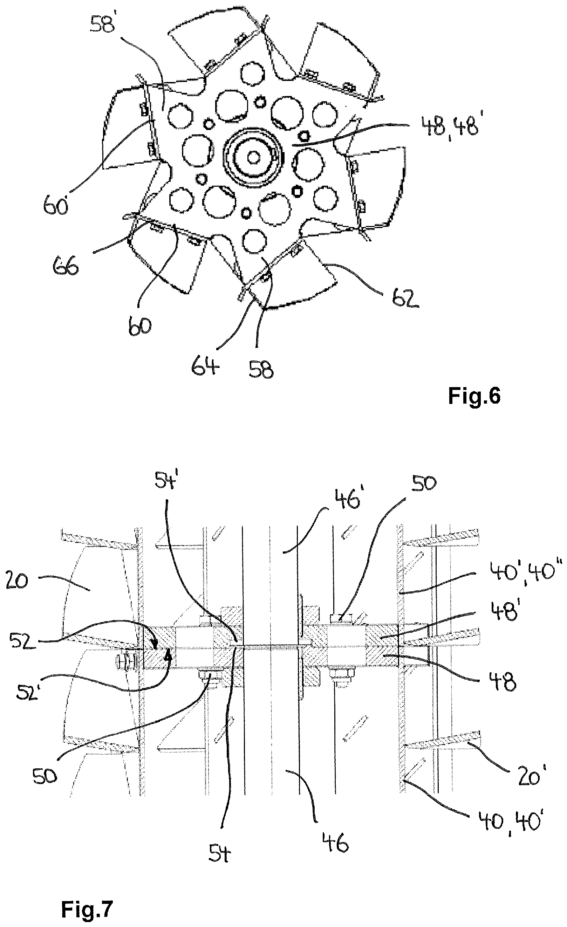

Wie Fig. 6 zeigt, sind die Verbindungsteile 48, 48' plattenförmig ausgebildet. In einer bevorzugten Ausführungsform sind die Verbindungsteile 48, 48' als Rotorsterne mit sternförmig nach außen abstehenden Vorsprüngen 58, 58' ausgebildet. Jeder Vorsprung 58, 58' weist eine seitliche Flanke 60, 60'auf, an dem die Transportelemente 20, 20' zum Umsetzen der Transportbewegung des festen Stoffes in Längsrichtung des Rotors 10 angeordnet sind. Die Transportelemente 20, 20' sind als Heberelemente ausgebildet. Die Transportelemente weisen entgegen ihrer Drehrichtung, insbesondere in Bewegungsrichtung des festen Stoffes, eine sich verringernde Breite auf. Die Vorderkante 62 eines jeweiligen Transportelementes 20, 20' ist mindestens um die Hälfte breiter als die Hinterkante 64 des Transportelementes.

Fig. 7 zeigt eine vergrößerte Ansicht des Verbindungsbereichs zwischen zwei Rotorsegmenten 40, 40', 40". Die Wellenabschnitte 46, 46', 46" stoßen in vorliegender Ausführung stumpf aneinander. Die Transportelemente 20, 20' sind über entsprechende Verbindungsbleche 66, welche im Wesentlichen parallel zur Längsachse 10' des Rotors verlaufen, an den Verbindungsteilen 48, 48' der jeweiligen Rotorsegmente befestigt. Mittels der Verschraubungen 50, 50' sind die Verbindungsteile 48, 48' der jeweiligen Rotorsegmente lösbar miteinander verbunden.

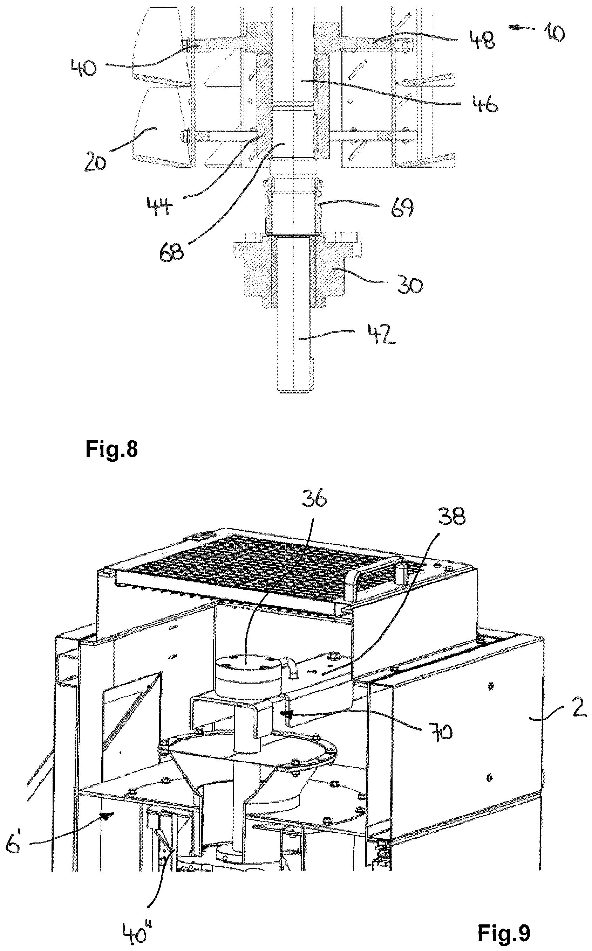

Fig. 8 verdeutlicht die Ausgestaltung des separaten Wellenabschnittes 42, der von dem unteren Drehlager 30 des Rotors aufgenommen ist. Der an der Lagerplatte 32 überstehende obere Zapfen 68 des Wellenabschnittes 42 wie auch die Wellenkupplung 44 sind innerhalb des unteren Rotorsegmentes 40 des Rotors 10 angeordnet. Die Wellenkupplung 44 verbindet den Zapfen 68 des Wellenabschnittes 42 drehfest mit dem unteren Abschnitt des Wellenabschnitts 46 des Rotorsegments 40. Die drehfeste Verbindung wird über entsprechende Nut und Passfeder-Verbindungen erreicht. Zudem ist am drehbaren Wellenabschnitt 42 eine Dichtelement 69 zum Abdichten gegenüber der feststehenden Lagerplatte 32 (Fig. 2) vorgesehen.

Fig. 9 zeigt das obere Ende des Gehäuses 2. Das obere Drehlager 36 ist an der Konsole 38 des Gehäuses 2 befestigt. Um das obere Rotorsegment 40" aus dem Gehäuse 2 entnehmen zu können, weist die Konsole 38 eine seitliche Ausnehmung 70 auf. Über die seitliche Ausnehmung 70 ist das Herausnehmen, bzw. das Einsetzen des Wellenabschnittes 46 mit dem daran angeordneten oberen Drehlager 36 möglich. Nach dem Lösen der Verschraubungen 50, 50' zwischen den Rotorsegmenten 40, 40', 40" sowie der drehfesten Verbindung an der Wellenkupplung 44 zum separaten Wellenabschnitt 42 und dem Lösen des oberen Drehlagers 36 an der Konsole 38 kann wenigstens eines der voneinander trennbaren Rotorsegmente 40, 40', 40" über die Gehäusetür 8 aus dem Gehäuse 2 der Trennvorrichtung 1 entnommen werden.

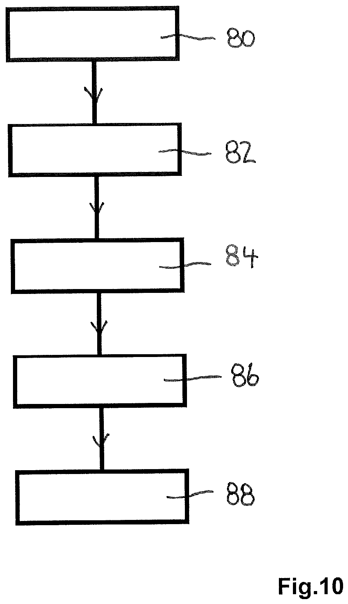

Nachfolgend wird das erfindungsgemäße Verfahren zum Warten einer Trennvorrichtung ergänzend in Verbindung mit dem Blockschaltbild aus Fig. 10 beschrieben. Gemäß einer Ausführungsform des erfindungsgemäßen Verfahrens, wird im Schritt 80 ein Teil, insbesondere die Gehäusetür 8 des Gehäuses 2 geöffnet und im Verfahrensschritt 82 wird zumindest ein Flächenelement, insbesondere das Sieb 12, demontiert, das mindestens einen Bereich des Rotors 10 umgibt. Im Schritt 84 wird mindestens ein Lager des Rotors 10, insbesondere das untere Drehlager 30 und/oder das obere Drehlager 36 des Rotors 10 gelöst. Ferner wird im Schritt 86 mindestens eine Verbindung, insbesondere die Verschraubungen 50, 50' zwischen zwei miteinander korrespondierenden Verbindungsteilen 48, 48' zweier Rotorsegmente 40, 40' gelöst. Und im Schritt 88 erfolgt das Entnehmen wenigstens eines Rotorsegmentes 40, 40', 40", insbesondere eines mittleren Rotorsegmente 40' durch eine seitliche Öffnung des Gehäuses 2, insbesondere durch die schwenkbare Gehäusetür 8 des Gehäuses 2.

### Bezugszeichenliste

- 1: Trennvorrichtung
- 2: Gehäuse
- 4: Einlass
- 6, 6': Auslass
- 8: Gehäusetür
- 10: Rotor
- 10': Längsachse
- 12: Sieb
- 14: Trennkammer
- 16: Antrieb
- 18: Getriebe
- 20, 20': Transportelement
- 22: Transportbewegung
- 24: Ventilator
- 24': Abluftkanal
- 26: Staublech
- 28: Kondensat-Leitung
- 30: unteres Drehlager
- 32: Lagerplatte
- 34: Verschraubung
- 36: oberes Drehlager
- 38: Konsole
- 40, 40', 40": Rotorsegment
- 42: Wellenabschnitt
- 44: Wellenkupplung
- 46, 46', 46": Wellenabschnitt
- 48, 48': Verbindungsteil
- 50, 50': Verschraubung
- 52, 52': Kontaktfläche
- 54, 54': Zentriermittel
- 56, 56': Formschlusselement
- 58, 58': Vorsprung
- 60, 60': Flanke
- 62: Vorderkante
- 64: Hinterkante
- 66: Verbindungsblech
- 68: Zapfen
- 69: Dichtelement
- 70: seitliche Ausnehmung
- 80, 82, 84: Verfahrensschritt
- 86, 88: Verfahrensschritt

## Patentansprüche

1. Trennvorrichtung (1), insbesondere Zentrifugaltrockner, zum Trennen eines Gemisches aus einem festen Stoff und einem Fluid, insbesondere von Granulat aus Wasser, mit
- einem Gehäuse (2), welches mindestens einen Gehäuseeinlass (4) zum Zuführen des Gemisches und mindestens einen Gehäuseauslass (6, 6') zum Abführen von aus dem Gemisch getrennten festen Stoffs oder des Fluids aufweist, und
- einem innerhalb des Gehäuses (2) angeordneten und um eine im Betrieb vorzugsweise im Wesentlichen vertikale Längsachse (10') drehbar gelagerten Rotor (10), der dazu eingerichtet ist, durch Drehung eine Transportbewegung (22) des festen Stoffes in Richtung seiner Längsachse (10') zu bewirken,
**dadurch gekennzeichnet, dass** der Rotor (10) in Richtung der Längsachse (10') mehrere voneinander trennbare Rotorsegmente (40, 40', 40") aufweist.

2. Trennvorrichtung nach Anspruch 1,
**dadurch gekennzeichnet, dass** zwei zueinander benachbarte Rotorsegmente (40, 40', 40") mittels korrespondierender Verbindungsteile (48, 48') reversibel lösbar miteinander verbunden sind.

3. Trennvorrichtung nach Anspruch 2,
**dadurch gekennzeichnet, dass** die Verbindungsteile (48, 48') der Rotorsegmente (40, 40', 40") miteinander in Kontakt bringbare Kontaktflächen (52, 52') aufweisen und Zentriermittel (54, 54') zur koaxialen und/oder radialen Ausrichtung der Rotorsegmente (40, 40', 40") relativ zueinander vorgesehen sind, die vorzugsweise an den Kontaktflächen (52, 52') ausgebildet sind.

4. Trennvorrichtung nach Anspruch 2 oder 3,
**dadurch gekennzeichnet, dass** die Verbindungsteile (48, 48') miteinander korrespondierende Kraftschluss- und/oder Formschlusselemente (56, 56') für eine vorgegebene Winkelausrichtung der Rotorsegmente (40, 40', 40") um ihre Längsachse herum aufweisen.

5. Trennvorrichtung nach Anspruch 1 bis 4,
**dadurch gekennzeichnet, dass** der Rotor (10) ein unteres Axial- und/oder Radiallager (30) zur drehbaren Lagerung aufweist, welches vorzugsweise an einer an einem unteren Abschnitt des Gehäuses (2) angeordneten Lagerplatte (32) befestigt ist.

6. Trennvorrichtung nach einem der vorstehenden Ansprüche,
**dadurch gekennzeichnet, dass** der Rotor (10) einen separaten Wellenabschnitt (42) aufweist, der vorzugsweise mittels des unteren Axial- und/oder Radiallagers (32) fest im Gehäuse (2) gelagert und sich bereichsweise in das untere Rotorsegment (40) des Rotors (10) hinein erstreckt.

7. Trennvorrichtung nach einem der vorstehenden Ansprüche,
**dadurch gekennzeichnet, dass** mindestens eines der Rotorsegmente (40, 40', 40"), insbesondere das untere Rotorsegment (40) mittels einer Wellenkupplung (44) mit dem separaten Wellenabschnitt zum Koppeln mit einem Antrieb zum Drehen des Rotors (10) gekoppelt ist, wobei die Wellenkupplung (44) vorzugsweise wenigstens abschnittsweise innerhalb des unteren Rotorsegments (40) angeordnet ist.

8. Trennvorrichtung nach mindestens einem der vorstehenden Ansprüche,
**dadurch gekennzeichnet, dass** mindestens ein Rotorsegment (40, 40', 40"), vorzugsweise alle Rotorsegmente (40, 40', 40") jeweils einen zentralen Wellenabschnitt (46, 46', 46") aufweisen, an den mindestens zwei Rotorsterne zum Halten von mehreren Transportelementen (20, 20') zum Transportieren des festen Stoffes in Richtung der Längsachse (10') des Rotors (10) angeordnet sind.

9. Trennvorrichtung nach mindestens einem der vorstehenden Ansprüche,
**dadurch gekennzeichnet, dass** jedes Rotorsegment (40, 40', 40") zwei in Richtung der Längsachse beabstandet zueinander angeordnete Verbindungsteile (48, 48') aufweist, wobei ein Verbindungsteil (48, 48') im Wesentlichen plattenförmig ausgebildet ist und/oder vorzugsweise als Rotorstern mit sternförmig nach außen abstehenden Vorsprüngen (58, 58') ausgebildet ist.

10. Trennvorrichtung nach Anspruch 9,
**dadurch gekennzeichnet, dass** die Rotorsegmente (40, 40', 40") mit ihren Transportelementen mindestens teilweise innerhalb eines den Rotor (10) umgebenden Siebes (12) angeordnet sind und/oder die Rotorsegmente (40, 40', 40") eine Vielzahl von vorzugsweise lamellenartigen Transportelementen (20, 20') aufweisen, welche vorzugsweise in mehreren Reihen um die Längsachse (10') herum angeordnet und/oder in einem Winkel geneigt zur Längsachse des Rotors (10) ausgerichtet sind.

11. Trennvorrichtung nach einem der vorstehenden Ansprüche,
**dadurch gekennzeichnet, dass** der Rotor (10) mittels eines oberen Drehlagers (36) an einer Konsole (38) am oberen Endbereich des Gehäuses (2) gelagert ist, wobei vorzugsweise das obere Rotorsegment (40") einen am oberen Ende vorstehenden Wellenabschnitt (46") aufweist, der mittels des Drehlagers (36) aufgenommen ist.

12. Trennvorrichtung nach Anspruch 11,
**dadurch gekennzeichnet, dass** die Konsole (38) eine Ausnehmung (70) zum seitlichen Herausführen des Wellenabschnittes (46") des oberen Rotorsegmentes (40") aufweist.

13. Trennvorrichtung nach einem der vorstehenden Ansprüche,
**dadurch gekennzeichnet, dass** der Rotor (10) in einer zumindest von dem Sieb (12) definierten den Rotor umfangsseitige umgebenden Trennkammer (14) eingeschlossen ist und/oder das Gehäuse (2) mindestens eine seitliche Öffnung und eine Klappe zum Verschließen der Öffnung aufweist, die so ausgebildet sind, dass ein Rotorsegment (40, 40', 40") oder alle Rotorsegmente (40, 40', 40") durch die Öffnung in das Gehäuse eingebracht bzw. durch die Öffnung aus dem Gehäuse (2) entnehmbar ist/sind.

14. Verfahren zum Warten einer Trennvorrichtung zum Trennen von Granulat aus einem flüssigen Förderstrom, insbesondere nach einem der vorstehenden Ansprüche 1 bis 13, wobei die Vorrichtung aufweist,
ein Gehäuse (2), welches mindestens einen Gehäuseeinlass (4) zum Zuführen des Gemisches und mindestens einen Gehäuseauslass (6, 6') zum Abführen von aus dem Gemisch getrennten festen Stoffs oder des Fluids aufweist,
einen innerhalb des Gehäuses (2) angeordneten und um eine im Betrieb vorzugsweise im Wesentlichen vertikale Längsachse (10') drehbar gelagerten Rotor (10), der dazu eingerichtet ist, durch Drehung eine Transportbewegung (22) des festen Stoffes in Richtung seiner Längsachse (10') zu bewirken, wobei der Rotor (10) in Richtung der Längsachse mehrere voneinander trennbare Rotorsegmente (40, 40', 40") aufweist;
mit den Schritten:
- Öffnen eines Teils des Gehäuses (2) und Demontieren zumindest eines Flächenelementes, welches mindestens einen Bereich einer den Rotor (10) umgebenden Trennkammer (14) ausbildet;
- Lösen mindestens eines Lagers des Rotors (10), vorzugsweise des oberen oder unteren Lagers (30, 36) des Rotors (10);
- Lösen mindestens einer Verbindung zwischen zwei benachbarten Rotorsegmenten (40, 40', 40"), und
- Entnehmen eines Rotorsegments (40, 40', 40"), insbesondere eines unterhalb des oberen Rotorsegmentes angeordneten Rotorsegmentes (40') durch bevorzugt eine seitliche Öffnung des Gehäuses (2), und vorzugsweises Entnehmen eines weiteren Rotorsegments, insbesondere des oberen oder unteren Rotorsegmentes aus dem Gehäuse (2) der Trennvorrichtung (1).

## Claims

1. Separation device (1), in particular centrifugal dryer, for separating a mixture comprising a solid material and a fluid, in particular granulate from water, having:
- a housing (2) which has at least one housing inlet (4) for supplying the mixture and at least one housing outlet (6, 6') for discharging solid material or fluid separated from the mixture, and
- a rotor (10) which is arranged inside the housing (2) and which is rotatably supported about a longitudinal axis (10'), which is preferably substantially vertical during operation, and which is configured to bring about by means of rotation a transport movement (22) of the solid material in the direction of the longitudinal axis (10') thereof,
**characterised in that** the rotor (10) has in the direction of the longitudinal axis (10') a plurality of rotor segments (40, 40', 40") which can be separated from each other.

2. Separation device according to claim 1,
**characterised in that** two mutually adjacent rotor segments (40, 40', 40") are connected to each other in a reversible, releasable manner by means of corresponding connection components (48, 48').

3. Separation device according to claim 2,
**characterised in that** the connection components (48, 48') of the rotor segments (40, 40', 40") have contact faces (52, 52') which can be brought into contact with each other and centring means (54, 54'), which are preferably constructed on the contact faces (52, 52'), are provided for coaxial and/or radial orientation of the rotor segments (40, 40', 40") relative to each other.

4. Separation device according to claim 2 or claim 3,
**characterised in that** the connection components (48, 48') have mutually corresponding non-positive-locking and/or positive-locking elements (56, 56') for a predetermined angular orientation of the rotor segments (40, 40', 40") about the longitudinal axis thereof.

5. Separation device according to claims 1 to 4,
**characterised in that**
the rotor (10) has a lower axial and/or radial bearing (30) for rotatable support which is preferably secured to a bearing plate (32) which is arranged on a lower portion of the housing (2).

6. Separation device according to any one of the preceding claims,
**characterised in that** the rotor (10) has a separate shaft portion (42) which is preferably securely supported in the housing (2) by means of the lower axial and/or radial bearing (32) and which extends partially into the lower rotor segment (40) of the rotor (10).

7. Separation device according to any one of the preceding claims,
**characterised in that** at least one of the rotor segments (40, 40', 40"), in particular the lower rotor segment (40), is coupled by means of a shaft coupling (44) to the separate shaft portion for coupling to a drive for rotating the rotor (10), wherein the shaft coupling (44) is preferably arranged at least partially inside the lower rotor segment (40).

8. Separation device according to at least one of the preceding claims,
**characterised in that** at least one rotor segment (40, 40', 40"), preferably all the rotor segments (40, 40', 40"), has/have a central shaft portion (46, 46', 46") on which at least two rotor spiders for retaining a plurality of transport elements (20, 20') for transporting the solid material in the direction of the longitudinal axis (10') of the rotor (10) are arranged.

9. Separation device according to at least one of the preceding claims,
**characterised in that** each rotor segment (40, 40', 40") has two connection components (48, 48') which are arranged spaced apart from each other in the direction of the longitudinal axis, wherein a connection component (48, 48') is constructed in a substantially plate-like manner and/or is preferably constructed as a rotor spider with projections (58, 58') which protrude outwards in a spider-like manner.

10. Separation device according to claim 9,
**characterised in that** the rotor segments (40, 40', 40") are arranged with the transport elements thereof at least partially inside a sieve (12) which surrounds the rotor (10) and/or the rotor segments (40, 40', 40") have a large number of preferably lamellar transport elements (20, 20') which are preferably arranged in several rows around the longitudinal axis (10') and/or which are orientated at an angle inclined relative to the longitudinal axis of the rotor (10).

11. Separation device according to any one of the preceding claims,
**characterised in that** the rotor (10) is supported by means of an upper rotary bearing (36) on a console (38) at the upper end region of the housing (2), wherein the upper rotor segment (40") preferably has a shaft portion (46") which protrudes at the upper end and which is received by means of the rotary bearing (36).

12. Separation device according to claim 11,
**characterised in that** the console (38) has a recess (70) for laterally guiding out the shaft portion (46") of the upper rotor segment (40").

13. Separation device according to any one of the preceding claims,
**characterised in that** the rotor (10) is enclosed in a separation chamber (14) which is defined at least by the sieve (12) and which surrounds the rotor at the peripheral side and/or the housing (2) has at least one lateral opening and a flap for closing the opening which are constructed in such a manner that one rotor segment (40, 40', 40") or all the rotor segments (40, 40', 40") is/are introduced into the housing through the opening or can be removed from the housing (2) through the opening.

14. Method for servicing a separation device for separating granulate from a liquid conveyor flow, in particular according to any one of the preceding claims 1 to 13, wherein the device has
a housing (2) which has at least one housing inlet (4) for supplying the mixture and at least one housing outlet (6, 6') for discharging solid material or fluid separated from the mixture,
a rotor (10) which is arranged inside the housing (2) and which is rotatably supported about a longitudinal axis (10'), which is preferably substantially vertical during operation, and which is configured to bring about by means of rotation a transport movement (22) of the solid material in the direction of the longitudinal axis (10') thereof, wherein the rotor (10) has in the direction of the longitudinal axis a plurality of rotor segments (40, 40', 40") which can be separated from each other;
having the steps of:
- opening a portion of the housing (2) and disassembling at least one surface element which forms at least a region of a separation chamber (14) which surrounds the rotor (10);
- releasing at least one bearing of the rotor (10), preferably the upper or lower bearing (30, 36) of the rotor (10) ;
- releasing at least one connection between two adjacent rotor segments (40, 40', 40"), and
- removing a rotor segment (40, 40', 40"), in particular a rotor segment (40') which is arranged below the upper rotor segment, preferably via a lateral opening of the housing (2), and preferably removing another rotor segment, in particular the upper or lower rotor segment, from the housing (2) of the separation device (1).

## Revendications

1. Dispositif de séparation (1), en particulier séchoir centrifuge, pour la séparation d'un mélange d'une substance solide et d'un fluide, en particulier de granulat d'eau, avec
- un boîtier (2) qui présente au moins une entrée de boîtier (4) pour l'alimentation du mélange et au moins une sortie de boîtier (6, 6') pour l'évacuation de substance solide séparée du mélange ou du fluide, et
- un rotor (10) logé de manière à pouvoir tourner autour d'un axe longitudinal (10') de préférence sensiblement vertical en fonctionnement et agencé dans le boîtier (2) qui est aménagé afin de provoquer par rotation un mouvement de transport (22) de la substance solide en direction de son axe longitudinal (10'),
**caractérisé en ce que** le rotor (10) présente en direction de l'axe longitudinal (10') plusieurs segments de rotor (40, 40', 40") séparables les uns des autres.

2. Dispositif de séparation selon la revendication 1,
**caractérisé en ce que** deux segments de rotor (40, 40', 40") contigus l'un à l'autre sont reliés entre eux de manière amovible et réversible au moyen de parties de liaison (48, 48') correspondantes.

3. Dispositif de séparation selon la revendication 2,
**caractérisé en ce que** les parties de liaison (48, 48') des segments de rotor (40, 40', 40") présentent des surfaces de contact (52, 52') pouvant être amenées en contact entre elles et des moyens de centrage (54, 54') sont prévus pour l'orientation coaxiale et/ou radiale des segments de rotor (40, 40', 40") les uns par rapport aux autres qui sont réalisés de préférence au niveau des surfaces de contact (52, 52').

4. Dispositif de séparation selon la revendication 2 ou 3,
**caractérisé en ce que** les parties de liaison (48, 48') présentent des éléments de liaison à force et/ou à complémentarité de forme (56, 56') correspondant l'un à l'autre pour une orientation angulaire prédéfinie des segments de rotor (40, 40', 40") autour de leur axe longitudinal.

5. Dispositif de séparation selon la revendication 1 à 4,
**caractérisé en ce que** le rotor (10) présente un palier axial et/ou radial inférieur (30) pour le logement rotatif qui est fixé de préférence à une plaque de palier (32) agencée au niveau d'une section inférieure du boîtier (2).

6. Dispositif de séparation selon l'une des revendications précédentes,
**caractérisé en ce que** le rotor (10) présente une section d'arbre (42) séparée qui est logée de préférence au moyen du palier axial et/ou radial inférieur (32) fixement dans le boîtier (2) et s'étend par endroits dans le segment de rotor (40) inférieur du rotor (10).

7. Dispositif de séparation selon l'une des revendications précédentes,
**caractérisé en ce qu'**au moins un des segments de rotor (40, 40', 40"), en particulier le segment de rotor (40) inférieur est couplé au moyen d'un couplage d'arbre (44) avec la section d'arbre séparée pour le couplage avec un entraînement pour la rotation du rotor (10), dans lequel le couplage d'arbre (44) est de préférence agencé au moins par sections dans le segment de rotor (40) inférieur.

8. Dispositif de séparation selon au moins l'une des revendications précédentes,
**caractérisé en ce qu'**au moins un segment de rotor (40, 40', 40"), de préférence tous les segments de rotor (40, 40', 40") présentent respectivement une section d'arbre (46, 46', 46") centrale, au niveau de laquelle au moins deux étoiles de rotor sont agencées pour le maintien de plusieurs éléments de transport (20, 20') pour le transport de la substance solide en direction de l'axe longitudinal (10') du rotor (10).

9. Dispositif de séparation selon au moins l'une des revendications précédentes,
**caractérisé en ce que** chaque segment de rotor (40, 40', 40") présente deux parties de liaison (48, 48') agencées à distance l'une de l'autre en direction de l'axe longitudinal, dans lequel une partie de liaison (48, 48') est réalisée sensiblement en forme de plaque et/ou est réalisée de préférence comme étoile de rotor avec des saillies (58, 58') dépassant en forme d'étoile vers l'extérieur.

10. Dispositif de séparation selon la revendication 9,
**caractérisé en ce que** les segments de rotor (40, 40', 40") sont agencés avec leurs éléments de transport au moins partiellement dans un tamis (12) entourant le rotor (10) et/ou les segments de rotor (40, 40', 40") présentent une pluralité d'éléments de transport (20, 20') de préférence de type lamelle qui sont agencés de préférence dans plusieurs rangées autour de l'axe longitudinal (10') et/ou sont orientés de manière inclinée dans un angle par rapport à l'axe longitudinal du rotor (10).

11. Dispositif de séparation selon l'une des revendications précédentes,
**caractérisé en ce que** le rotor (10) est logé au moyen d'un palier rotatif (36) supérieur au niveau d'une console (38) au niveau de la zone d'extrémité supérieure du boîtier (2), dans lequel de préférence le segment de rotor (40") supérieur présente une section d'arbre (46") dépassant à l'extrémité supérieure qui est reçue au moyen du palier rotatif (36).

12. Dispositif de séparation selon la revendication 11,
**caractérisé en ce que** la console (38) présente un évidement (70) pour la sortie latérale de la section d'arbre (46") du segment de rotor (40") supérieur.

13. Dispositif de séparation selon l'une des revendications précédentes,
**caractérisé en ce que** le rotor (10) est inclus dans une chambre de séparation (14) entourant côté périphérie le rotor, définie au moins par le tamis (12) et/ou le boîtier (2) présente au moins une ouverture latérale et un clapet pour la fermeture de l'ouverture qui sont réalisés de sorte qu'un segment de rotor (40, 40', 40") ou tous les segments de rotor (40, 40', 40") soit/soient introduit(s) à travers l'ouverture dans le boîtier ou puisse(nt) être retiré(s) à travers l'ouverture du boîtier (2).

14. Procédé de maintenance d'un dispositif de séparation pour la séparation de granulat d'un courant de refoulement liquide, en particulier selon l'une des revendications précédentes 1 à 13, dans lequel le dispositif présente
un boîtier (2) qui présente au moins une entrée de boîtier (4) pour l'alimentation du mélange et au moins une sortie de boîtier (6, 6') pour l'évacuation de la substance solide séparée du mélange ou du fluide,
un rotor (10) logé de manière à pouvoir tourner autour d'un axe longitudinal (10') de préférence sensiblement vertical dans le fonctionnement et agencé dans le boîtier (2) qui est aménagé afin de provoquer par rotation un mouvement de transport (22) de la substance solide en direction de son axe longitudinal (10'), dans lequel le rotor (10) présente en direction de l'axe longitudinal plusieurs segments de rotor (40, 40', 40") séparables les uns des autres ;
avec les étapes :
- d'ouverture d'une partie du boîtier (2) et de démontage au moins d'un élément de surface qui réalise au moins une zone d'une chambre de séparation (14) entourant le rotor (10) ;
- de détachement d'au moins un palier du rotor (10), de préférence du palier supérieur ou inférieur (30, 36) du rotor (10) ;
- de détachement d'au moins une liaison entre deux segments de rotor (40, 40', 40") contigus, et
- de retrait d'un segment de rotor (40, 40', 40"), en particulier d'un segment de rotor (40') agencé sous le segment de rotor supérieur par de préférence une ouverture latérale du boîtier (2), et de préférence de retrait d'un autre segment de rotor, en particulier du segment de rotor supérieur ou inférieur du boîtier (2) du dispositif de séparation (1).
